# EUROPEAN PATENT SPECIFICATION

(11) **EP 3 348 858 B1**
(45) Date of publication and mention of the grant of the patent: **01.05.2019**
(21) Application number: 16873146.1
(22) Date of filing: 12.12.2016
(51) Int. Cl.: F16F 15/134, F16H 45/02, F16F 15/123, F16D 13/64

(54) **DAMPER DEVICE**
DÄMPFUNGSVORRICHTUNG
DISPOSITIF AMORTISSEUR

(30) Priority: 10.12.2015 JP 2015241277
(43) Date of publication of application: 18.07.2018
(73) Proprietor: AISIN AW CO., LTD., Anjo-shi, Aichi 444-1192 (JP)
(72) Inventor: TAKIKAWA, Yoshihiro, Anjo-shi Aichi 444-1192 (JP); NAGAI, Hiroki, Anjo-shi Aichi 444-1192 (JP); WAJIMA, Masaki, Anjo-shi Aichi 444-1192 (JP); SAKAMOTO, Takao, Anjo-shi Aichi 444-1192 (JP); ITOU, Kazuhiro, Anjo-shi Aichi 444-1192 (JP)
(74) Representative: Kramer Barske Schmidtchen Patentanwälte PartG mbB
(86) International application number: PCT/JP2016/086954
(87) International publication number: WO 2017/099254

(56) References cited:
- WO-A1-2010/043301
- DE-A1-102009 013 965
- DE-A1-102009 013 965
- JP-A- 2010 230 155
- JP-A- 2012 506 006

## Description

### TECHNICAL FIELD

The invention of the present disclosure relates to a damper device including an input element to which torque from an engine is transmitted and an output element.

### BACKGROUND ART

Conventionally, a double path damper that is used for a torque converter is known as this type of damper devices (see, for example, Patent Document 1). In this damper device, a vibration path from an engine and a lock-up clutch to an output hub is divided into two parallel vibration paths B and C. Each of the two vibration paths B and C includes paired springs and a separate intermediate flange disposed between the paired springs. A turbine of a torque converter is connected to the intermediate flange of the vibration path B so that the natural frequency differs between the two vibration paths. The natural frequency of the intermediate flange in the vibration path B is lower than that of the intermediate flange in the vibration path C. In this damper device, when the lock-up clutch is engaged, engine vibration enters the two vibration paths B and C of the damper device. When the engine vibration having a certain frequency reaches the vibration path B including the intermediate flange connected to the turbine, the vibration from the intermediate flange to the output hub in the vibration path B is phase-shifted by 180 degrees with respect to the input vibration. Since the natural frequency of the intermediate flange in the vibration path C is higher than that of the intermediate flange in the vibration path B, the vibration having entered the vibration path C is transmitted to the output hub without any phase shift. Thus, the vibration transmitted to the output hub through the vibration path B is phase-shifted by 180 degrees with respect to the vibration transmitted to the output hub through the vibration path C, thereby damping the vibration at the output hub.

### Related Art Document

### Patent Document

Patent Document 1: Published Japanese Translation of PCT Application No. 2012-506006 and the English Publication WO2010/043301 A1.

### SUMMARY OF THE INVENTION

In the double path damper disclosed in Patent Document 1, the natural frequency of each vibration path is determined based on the mass of the intermediate flange and the spring constant of elastic bodies provided on the opposite sides thereof. In the damper device, it is not preferable that the weight of the intermediate flange and the turbine be increased, and the setting range of the spring constant of the elastic bodies is limited by space and weight. Accordingly, in the double path damper described above, it is not easy to appropriately set a natural frequency of each vibration path to improve the vibration damping performance. Further, in the case where the frequency of vibration transmitted to the vibration paths B and C is smaller than the natural frequency of the intermediate flange of the vibration path B (the smaller one of the natural frequencies), the above-descried double path damper cannot successfully damp the vibration. Therefore, there is still room for improvement in vibration damping performance in the low rotation range.

Accordingly, a primary object of the present invention is to provide a damper device having higher vibration damping performance.

A damper device according to the present disclosure includes an input element to which torque from an engine is transmitted and an output element. The damper device includes: a first intermediate element; a second intermediate element; a first elastic body disposed between the input element and the first intermediate element; a second elastic body disposed between the first intermediate element and the output element; a third elastic body disposed between the input element and the second intermediate element; a fourth elastic body disposed between the second intermediate element and the output element; and a fifth elastic body disposed between the first intermediate element and the second intermediate element, wherein at least one of the first to fifth elastic bodies has negative rigidity.

In this damper device, the first elastic body transmits torque from the input element to the first intermediate element, and the second elastic body transmits torque from the first intermediate element to the output element. The third elastic body transmits torque from the input element to the second intermediate element, and the fourth elastic body transmits torque from the second intermediate element to the output element. The fifth elastic body transmits torque between the first intermediate element and the second intermediate element, and one of the first to fifth elastic bodies has negative rigidity. Accordingly, when torque transmitted from the engine to the input element is transmitted to the output element, the first intermediate element and the second intermediate element are rotated in opposite directions so that the vibration transmitted from the second elastic body to the output element and the vibration transmitted from the fourth elastic body to the output element can be phase-shifted with respect to each other. Therefore, in the damper device according to the present disclosure, regardless of whether at least one of the first and second intermediate elements resonates, one of the vibration transmitted from the second elastic body to the output element and the vibration transmitted from the fourth elastic body to the output element can cancel at least part of the other vibration. As a result, even when the rotational speed of the input element is lower than the rotational speed corresponding to a lower one of the natural frequencies of the first and second intermediate elements, the vibration damping performance can successfully be improved.

### BRIEF DESCRIPTION OF THE DRAWINGS

FIG. 1 is a schematic configuration diagram illustrating a starting device including a damper device according to the present disclosure.
FIG. 2 is a schematic diagram for explaining an average mounting radius of first to fourth elastic bodies in the damper device according to the present disclosure.
FIG. 3 is a schematic diagram illustrating a main part of the damper device according to the present disclosure.
FIG. 4 is a schematic diagram for explaining the operation of the damper device according to the present disclosure.
FIG. 5 is an explanatory diagram illustrating the relationship between the rotational speed of an engine and torque fluctuation T_{Fluc} in an output element of the damper device.
FIG. 6 is a schematic configuration diagram illustrating a starting device including another damper device according to the present disclosure.
FIG. 7 is a schematic configuration diagram illustrating a starting device including still another damper device according to the present disclosure.
FIG. 8 is a schematic configuration diagram illustrating a starting device including another damper device according to the present disclosure.

### MODES FOR CARRYING OUT THE INVENTION

Hereinafter, embodiments of the invention of the present disclosure will be described with reference to the drawings.

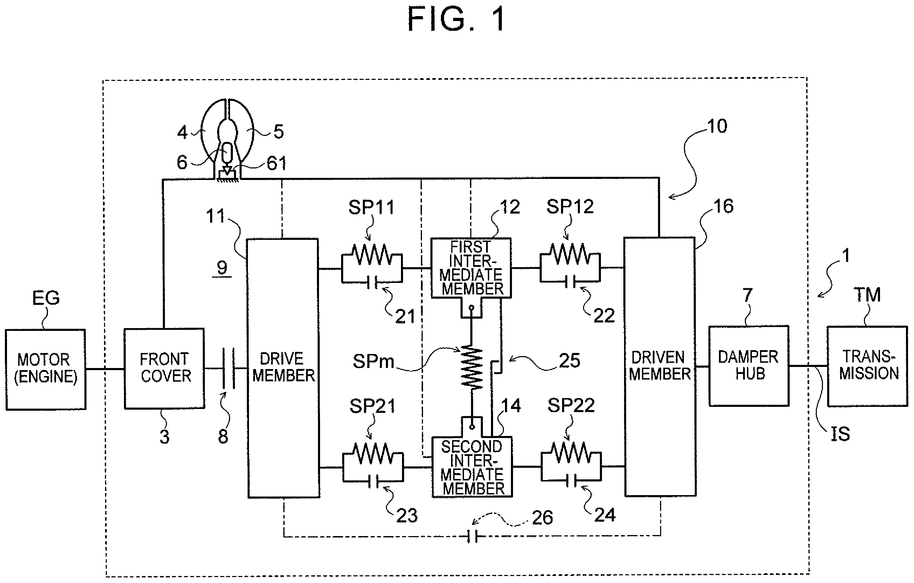

FIG. 1 is a schematic configuration diagram illustrating a starting device 1 including a damper device 10 according to the present disclosure. The starting device 1 illustrated in FIG. 1 is mounted on a vehicle including an engine (internal combustion engine in the present embodiment) EG as a motor. The starting device 1 includes: in addition to the damper device 10, a front cover 3 coupled to a crankshaft of the engine EG; a pump impeller (input-side fluid transmission element) 4 fixed to the front cover 3; a turbine runner (output-side fluid transmission element) 5 that is rotatable coaxially with the pump impeller 4; a damper hub 7 as a power output member that is coupled to the damper device 10 and fixed to an input shaft IS of a transmission (power transmission device) TM, which is an automatic transmission (AT), a continuously variable transmission (CVT), a dual-clutch transmission (DCT), a hybrid transmission, or a reducer; and a lock-up clutch 8.

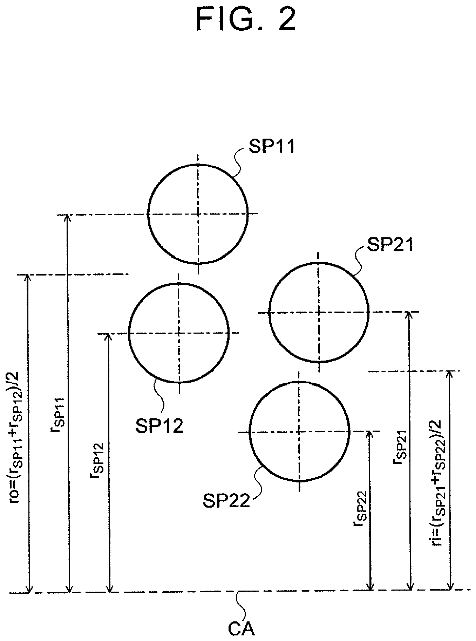

In the following description, the "axial direction" basically refers to the direction in which a central axis CA (axis, see FIG. 2) of the starting device 1 and the damper device 10 extends, unless otherwise specified. The "radial direction" basically refers to the radial direction of the starting device 1, the damper device 10, or rotary elements of the damper device 10 and so on, that is, the extending direction of the line that extends from the central axis CA of the starting device 1 and the damper device 10 in a direction (direction of the radius) perpendicular to the central axis CA, unless otherwise specified. The "circumferential direction" basically refers to the circumferential direction of the starting device 1, the damper device 10, or the rotary elements of the damper device 10 and so on, that is, the direction along the rotational direction of the rotary elements, unless otherwise specified.

The pump impeller 4 includes a pump shell (not illustrated) that is tightly fixed to the front cover 3, and a plurality of pump blades (not illustrated) disposed on the inner surface of the pump shell. The turbine runner 5 includes a turbine shell (not illustrated) and a plurality of turbine blades (not illustrated) disposed on the inner surface of the turbine shell. The inner peripheral portion of the turbine shell is fixed to the damper hub 7 via a plurality of rivets.

The pump impeller 4 and the turbine runner 5 face each other, and a stator 6 that adjusts the flow of hydraulic oil (hydraulic fluid) from the turbine runner 5 to the pump impeller 4 is disposed coaxially therebetween. The stator 6 includes a plurality of stator blades (not illustrated). The stator 6 is rotated only in one direction by a one-way clutch 61. The pump impeller 4, the turbine runner 5, and the stator 6 form a torus (annular flow path) in which hydraulic oil circulates, and serve as a torque converter (fluid transmission device) having a function to amplify torque. In the starting device 1, the stator 6 and the one-way clutch 61 may be omitted, and the pump impeller 4 and the turbine runner 5 may serve as a fluid coupling.

The lock-up clutch 8 performs a lock-up operation that couples the front cover 3 to the damper hub 7 via the damper device 10, and an operation that releases the lock-up. The lock-up clutch 8 may be a hydraulic single-plate clutch, or may be a hydraulic multi-plate clutch including at least one friction engagement plate (a plurality of friction materials).

The damper device 10 damps vibration between the engine EG and the transmission TM. As illustrated in FIG. 1, the damper device 10 includes, as rotary elements (rotary members, that is, rotary mass bodies) that rotate relatively and coaxially, a drive member (input element) 11, a first intermediate member (first intermediate element) 12, a second intermediate member (second intermediate element) 14, and a driven member (output element) 16. The damper device 10 further includes, as torque transmission elements (torque transmission elastic bodies), a plurality of (e.g., four in the present embodiment) first outer springs (first elastic bodies) SP11 that are disposed between the drive member 11 and the first intermediate member 12 to transmit rotational torque (torque in the rotational direction), a plurality of (e.g., four in the present embodiment) second outer springs (second elastic bodies) SP12 that are disposed between the first intermediate member 12 and the driven member 16 to transmit rotational torque, a plurality of (e.g., four in the present embodiment) first inner springs (third elastic bodies) SP21 that are disposed between the drive member 11 and the second intermediate member 14 to transmit rotational torque, a plurality of (e.g., four in the present embodiment) second inner springs (fourth elastic bodies) SP22 that are disposed between the second intermediate member 14 and the driven member 16 to transmit rotational torque, and a plurality of (e.g., four in the present embodiment) intermediate springs (fifth elastic bodies) SPm that are disposed between the first intermediate member 12 and the second intermediate member 14 to transmit rotational torque.

In the present embodiment, the first and second outer springs SP11 and SP12 and the first and second inner springs SP21 and SP22 are linear coil springs each made of a metal material wound in a helical shape so as to have an axis extending straight when not subjected to a load. As compared to the case where the springs SP11, SP12, SP21, and SP22 are arc coil springs, the springs SP11, SP12, SP21, and SP22 can be more properly extended and contracted along their axes, and hysteresis resulting from the friction force generated between springs that transmit torque and rotary elements (that is, the difference between the torque that is output when input torque to the drive member 11 increases and the torque that is output when the input torque to the drive member 11 decreases) can be reduced. The hysteresis can be quantified as the difference between the torque that is output from the driven member 16 when input torque to the drive member 11 increases and the torsion angle of the damper device 10 reaches a predetermined angle and the torque that is output from the driven member 16 when the input torque decreases and the torsion angle of the damper device 10 reaches the predetermined angle. Note that at least one of the springs SP11, SP12, SP21, and SP22 may be an arc coil spring. Further, in the present embodiment, the intermediate springs SPm are linear coil springs each made of a metal material that is wound in a helical shape so as to have an axis extending straight when not subjected to a load.

In the present embodiment, the first outer springs SP11 and the second outer springs SP12 are disposed in an outer peripheral region in a fluid transmission chamber 9 so as to be alternately arranged in pairs (to act in series) in the circumferential direction of the damper device 10 (first intermediate member 12). The first and second inner springs SP21 and SP22 are disposed radially inward of the first and second outer springs SP11 and SP12 and the intermediate springs SPm so as to be alternately arranged in pairs (to act in series) in the circumferential direction of the damper device 10 (second intermediate member 14), and are surrounded by the first and second outer springs SP11 and SP12.

Accordingly, in the damper device 10, an average mounting radius ro of the first and second outer springs SP11 and SP12 is greater than an average mounting radius ri of the first and second inner springs SP21 and SP22. As illustrated in FIG. 2, the average mounting radius ro of the first and second outer springs SP11 and SP12 is the average value (= (r_{SP11} + r_{SP12})/2) of a mounting radius r_{SP11} of each first outer spring (first elastic body) SP11, which is the distance from the central axis CA of the damper device 10 to the axis of each first outer spring SP11, and a mounting radius r_{SP12} of each second outer spring (second elastic body) SP12, which is the distance from the central axis CA to the axis of each second outer spring SP12. As illustrated in FIG. 2, the average mounting radius ri of the first and second inner springs SP21 and SP22 is the average value (= (r_{SP21} + r_{SP22})/2) of a mounting radius r_{SP21} of each first inner spring (third elastic body) SP21, which is the distance from the central axis CA to the axis of each first inner spring SP21, and a mounting radius r_{SP22} of each second inner spring (fourth elastic body) SP22, which is the distance from the central axis CA to the axis of each second inner spring SP22. Each of the mounting radii r_{SP11}, r_{SP12}, r_{SP21} and r_{SP22} may be the distance between the central axis CA and a predetermined point (for example, the center or the end in the axial direction) on the axis of each of the springs SP11, SP12, SP21, and SP22.

In the present embodiment, the first and second outer springs SP11 and SP12 are arranged on the same circumference such that the mounting radius r_{SP11} and the mounting radius r_{SP12} are equal, and the axis of each first outer spring SP11 and the axis of each second outer spring SP12 are contained in a plane orthogonal to the central axis CA. Further, in the present embodiment, the first and second inner springs SP21 and SP22 are arranged on the same circumference such that the mounting radius r_{SP21} and the mounting radius r_{SP22} are equal, and the axis of each first inner spring SP21 and the axis of each second inner spring SP22 are contained in a plane orthogonal to the central axis CA. Furthermore, in the damper device 10, the first and second inner springs SP21 and SP22 are disposed radially inward of the first and second outer springs SP11 and SP12 so as to overlap the first and second outer springs SP11 and SP12 in the axial direction as viewed from the radial direction. Accordingly, it is possible to downsize the damper device 10 in the radial direction, and to further reduce the axial length of the damper device 10.

However, as illustrated in FIG. 2, the mounting radius r_{SP11} from the central axis CA to the axis of each first outer spring SP11 and the mounting radius r_{SP12} from the central axis CA to the axis of each second outer spring SP12 may be different. Also, the mounting radius r_{SP21} from the central axis CA to the axis of each first inner spring SP21 and the mounting radius r_{SP22} from the central axis CA to the axis of each second inner spring SP22 may be different. That is, at least one of the mounting radii r_{SP11} and r_{SP12} of the first and second outer springs SP11 and SP12 may be greater than at least one of the mounting radii r_{SP21} and r_{SP22} of the first and second inner springs SP21 and SP22. Further, the axis of each first outer spring SP11 and the axis of each second outer spring SP12 do not have to be contained in a plane orthogonal to the central axis CA. Also, the axis of each first inner spring SP21 and the axis of each second inner spring SP22 do not have to be contained in a plane orthogonal to the central axis CA. Further, the axes of the springs SP11, SP12, SP21, and SP22 may be contained in a plane orthogonal to the central axis CA. At least one of the axes of the springs SP11, SP12, SP21, and SP22 does not have to be contained in the plane.

The drive member 11 of the damper device 10 is fixed to a lock-up piston, a clutch drum, or a clutch hub of the lock-up clutch 8, and is rotatable with the lock-up piston or the like. Accordingly, when the lock-up clutch 8 is engaged, the front cover 3 (engine) and the drive member 11 of the damper device 10 are coupled. The drive member 11 may include a plurality of plate members that are arranged in the axial direction of the damper device 10 and are coupled to rotate together.

The drive member 11 has a plurality of (e.g., four in the present embodiment) inner spring contact portions (elastic body contact portions) formed at intervals in the circumferential direction, and a plurality of (e.g., four in the present embodiment) outer spring contact portions (elastic body contact portions) formed radially outward of the plurality of inner spring contact portions at intervals in the circumferential direction (neither illustrated).

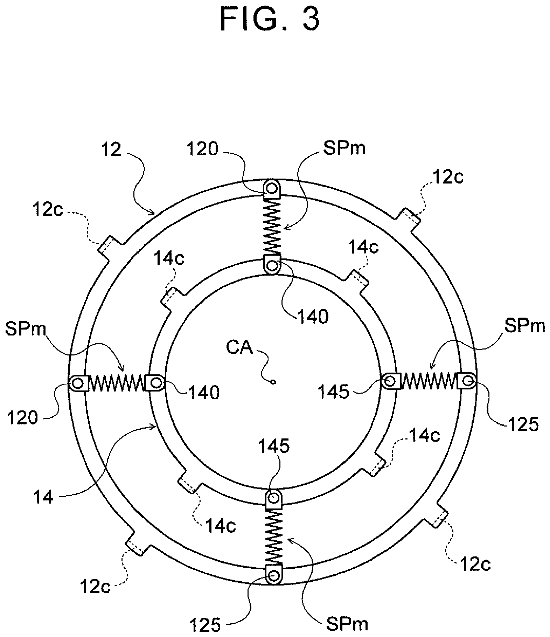

The first intermediate member 12 is an annular member as illustrated in FIG. 3, and has a plurality of (e.g., four in the present embodiment) spring contact portions 12c formed at intervals (regular intervals) in the circumferential direction to extend in the axial direction of the first intermediate member 12. The second intermediate member 14 is an annular member with a smaller diameter than the first intermediate member 12 as illustrated in FIG. 3, and has a plurality of (e.g., four in the present embodiment) spring contact portions 14c formed at intervals (regular intervals) in the circumferential direction to extend in the axial direction of the second intermediate member 14.

The driven member 16 is fixed to the damper hub 7 via rivets or by welding. The driven member 16 has a plurality of (e.g., four in the present embodiment) inner spring contact portions (elastic body contact portions) formed near the inner peripheral edge of the driven member 16 at intervals in the circumferential direction, and a plurality of (e.g., four in the present embodiment) outer spring contact portions (elastic body contact portions) formed radially outward of the plurality of inner spring contact portions at intervals in the circumferential direction (neither illustrated).

When the damper device 10 is in a mounted state (when assembly is completed and the damper device 10 is in a resting state and not in operation), each outer spring contact portion of the drive member 11 is located between the first and second outer springs SP11 and SP12 that are not paired (that do not act in series) and contacts the ends of these two. Similarly, when the damper device 10 is in the mounted state, each outer spring contact portion of the driven member 16 is located between the first and second outer springs SP11 and SP12 that are not paired (that do not act in series) and contacts the ends of these two. Similarly, when the damper device 10 is in the mounted state, each inner spring contact portion of the drive member 11 is located between the first and second inner springs SP21 and SP22 that are not paired (that do not act in series) and contacts the ends of these two. Similarly, when the damper device 10 is in the mounted state, each inner spring contact portion of the driven member 16 is located between the first and second inner springs SP21 and SP22 that are not paired (that do not act in series) and contacts the ends of these two.

In the present embodiment, the first intermediate member 12 is disposed closer to the turbine runner 5 than the drive member 11 and the driven member 16 are. Each spring contact portion 12c of the first intermediate member 12 is located between the paired first and second outer springs SP11 and SP12 and contacts the ends of these two. In the present embodiment, the second intermediate member 14 is disposed radially inward of the first intermediate member 12 so as to be closer to the turbine runner 5 than the drive member 11 and the driven member 16 are. Each spring contact portion 14c of the second intermediate member 14 is located between the paired first and second inner springs SP21 and SP22 and contacts the ends of these two.

Accordingly, when the damper device 10 is in the mounted state, one end of each first outer spring SP11 contacts a corresponding one of the outer spring contact portions of the drive member 11 and a corresponding one of the outer spring contact portions of the driven member 16, and the other end of each first outer spring SP11 contacts a corresponding one of the spring contact portions 12c of the first intermediate member 12. Also, when the damper device 10 is in the mounted state, one end of each second outer spring SP12 contacts a corresponding one of the spring contact portions 12c of the first intermediate member 12, and the other end of each second outer spring SP12 contacts a corresponding one of the outer spring contact portions of the drive member 11 and a corresponding one of the outer spring contact portions of the driven member 16.

Further, one end of each first inner spring SP21 contacts a corresponding one of the inner spring contact portions of the drive member 11 and a corresponding one of the inner spring contact portions of the driven member 16, and the other end of each first inner spring SP21 contacts a corresponding one of the spring contact portions 14c of the second intermediate member 14. Also, when the damper device 10 is in the mounted state, one end of each second inner spring SP22 contacts a corresponding one of the spring contact portions 14c of the second intermediate member 14, and the other end of each second inner spring SP22 contacts a corresponding one of the inner spring contact portions of the drive member 11 and a corresponding one of the inner spring contact portions of the driven member 16.

As a result, the driven member 16 is coupled to the drive member 11 via the plurality of first outer springs SP11, the first intermediate member 12, and the plurality of second outer springs SP12, and is coupled to the drive member 11 via the plurality of first inner springs SP21, the second intermediate member 14, and the plurality of second inner springs SP22. When the damper device 10 is in the mounted state, each of the first and second outer springs SP11 and SP12 and the first and second inner springs SP21 and SP22 is maintained at its natural length or slightly compressed from its natural length. Accordingly, the reaction force of each of the springs SP11, SP12, SP21, and SP22 increases as the relative torsion angle between two rotary elements disposed on the opposite sides thereof increases. That is, all the first and second outer springs SP11 and SP12 and the first and second inner springs SP21 and SP22 have positive rigidity.

As illustrated in FIG. 3, each of the plurality of intermediate springs SPm is coupled to a point between circumferentially adjacent spring contact portions 12c of the first intermediate member 12 and to a point between circumferentially adjacent spring contact portions 14c of the second intermediate member 14, and are arranged radially with respect to the first and second intermediate members 12 and 14. As illustrated in FIG. 3, one end of each intermediate spring SPm is fixed to a first coupling member 120, and the other end of each intermediate spring SPm is fixed to a second coupling member 140. The first coupling member 120 is rotatably coupled to a coupling portion that is defined between circumferentially adjacent spring contact portions 12c of the first intermediate member 12 via a first coupling pin 125 extending in the axial direction of the first intermediate member 12 (damper device 10). As illustrated in FIG. 3, a plurality of first coupling pins 125 are arranged on the first intermediate member 12 at regular intervals (90° in the present embodiment). Further, the second coupling member 140 is rotatably coupled to a coupling portion that is defined between circumferentially adjacent spring contact portions 14c of the second intermediate member 14 via a second coupling pin 145 extending in the axial direction of the second intermediate member 14 (damper device 10). As illustrated in FIG. 3, a plurality of second coupling pins 145 are arranged on the second intermediate member 14 at regular intervals (90° in the present embodiment).

When the damper device 10 is in the mounted state, the plurality of intermediate springs SPm are coupled to the first and second intermediate members 12 and 14 to extend in the radial direction of the damper device 10 and are sufficiently compressed from its natural length. Thus, each intermediate spring SPm can expand in accordance with relative rotation between the first and second intermediate members 12 and 14, and the reaction force of each intermediate spring SPm decreases as the relative torsion angle between the first and second intermediate members 12 and 14 disposed on the opposite sides thereof increases. That is, the intermediate springs SPm have negative rigidity.

As illustrated in FIG. 1, the damper device 10 further includes a first stopper 21 that restricts deflection of the first outer springs SP11, a second stopper 22 that restricts deflection of the second outer springs SP12, a third stopper 23 that restricts deflection of the first inner springs SP21, a fourth stopper 24 that restricts deflection of the second inner springs SP22, and a fifth stopper 25 that restricts deflection of the intermediate springs SPm. Each of the first to fifth stoppers 21 to 25 restricts deflection of the corresponding spring after the input torque that is transmitted from the engine to the drive member 11 reaches predetermined torque (first threshold) T1 smaller than torque T2 (second threshold) corresponding to a maximum torsion angle θmax of the damper device 10. Setting appropriate operation timings for the first to fifth stoppers 21 to 25 allows the damper device 10 to have multi-stage (two or more stages) damping characteristics.

In the present embodiment, the first stopper 21 restricts relative rotation between the drive member 11 and the first intermediate member 12. The second stopper 22 restricts relative rotation between the first intermediate member 12 and the driven member 16. The third stopper 23 restricts relative rotation between the drive member 11 and the second intermediate member 14. The fourth stopper 24 restricts relative rotation between the second intermediate member 14 and the driven member 16. The fifth stopper 25 restricts relative rotation between the first intermediate member 12 and the second intermediate member 14. Note that, as indicated by the long dashed double-short dashed line in FIG. 1, a stopper 26 that restricts relative rotation between the drive member 11 and the driven member 16 may be provided, and any two or three of the first to fifth stoppers 21 to 25 may be omitted. That is, as long as the deflection of the springs SP11 to SPm is restricted at an appropriate timing, it is not necessary to provide five stoppers corresponding to the springs SP11 to SPm.

In the following, the operation of the damper device 10 will be described.

In the starting device 1, when lock-up by the lock-up clutch 8 is released, rotational torque (power) transmitted from the engine EG to the front cover 3 is transmitted to the input shaft IS of the transmission TM through a path including the pump impeller 4, the turbine runner 5, the driven member 16, and the damper hub 7. On the other hand, when lock-up is performed by the lock-up clutch 8 of the starting device 1, rotational torque (input torque) transmitted from the engine EG to the drive member 11 via the front cover 3 and the lock-up clutch 8 is transmitted to the driven member 16 and the damper hub 7 via all the springs SP11 to SPm, until the input torque to the drive member 11 reaches the torque T1, that is, while deflection of all the first and second outer springs SP11 and SP12, the first and second inner springs SP21 and SP22, and the intermediate springs SPm is allowed.

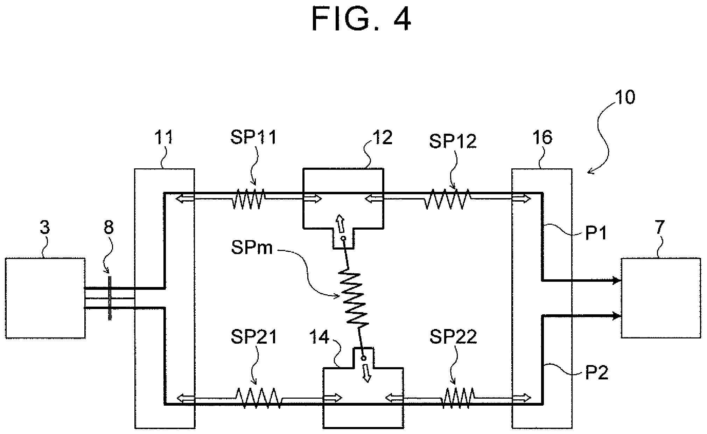

That is, until the input torque reaches the torque T1 during a lock-up operation, the first outer springs (first elastic bodies) SP11 transmit rotational torque from the drive member 11 to the first intermediate member 12, and the second outer springs (second elastic bodies) SP12 transmit rotational torque from the first intermediate member 12 to the driven member 16. Further, the first inner springs (third elastic bodies) SP21 transmit rotational torque from the drive member 11 to the second intermediate member 14, and the second inner springs (fourth elastic bodies) SP22 transmit rotational torque from the second intermediate member 14 to the driven member 16. Accordingly, as illustrated in FIG. 4, as torque transmission paths between the drive member 11 and the driven member 16, the damper device 10 has a first torque transmission path PI including the first outer springs SP11, the first intermediate member 12, and the second outer springs SP12, and a second torque transmission path P2 including the first inner springs SP21, the second intermediate member 14, and the second inner springs SP22.

As described above, the first and second outer springs SP11 and SP12 and the first and second inner springs SP21 and SP22 have positive rigidity, and the intermediate springs SPm have negative rigidity. Thus, when the first and second intermediate members 12 and 14 rotate relative to each other upon start of rotation of the drive member 11 by the torque transmitted from the engine EG, each of the intermediate springs SPm having been compressed from its natural length in a resting state expands simultaneously with the start of the relative rotation between the two so that the first intermediate member and the second intermediate member are rotated in opposite directions (the relative torsion angle is increased or reduced) as is understood from FIG. 4. Accordingly, in the damper device 10, when torque transmitted from the engine EG to the drive member 11 is transmitted to the driven member 16, the vibration transmitted from the second outer springs (second elastic bodies) SP12 to the driven member 16 and the vibration transmitted from the second inner springs (fourth elastic bodies) SP22 to the driven member 16 can be phase-shifted with respect to each other. As a result, in the damper device 10, one of the vibration transmitted from the second outer springs SP12 to the driven member 16 and the vibration transmitted from the second inner springs SP22 to the driven member 16 can cancel at least part of the other vibration.

As illustrated in FIG. 4, in the case where torque is transmitted to the drive member 11 before the input torque reaches the torque T1 during a lock-up operation, one of the first and second intermediate members 12 and 14 (the second intermediate member 14 in the example of FIG. 4) is (slightly) twisted to the advancing direction side (downstream side) in the rotational direction (the rotational direction during forward movement of the vehicle), with respect to the other one (the first intermediate member 12 in the example of FIG. 4). Thus, until the input torque reaches the torque T1 during a lock-up operation, each intermediate spring SPm transmits, to the first intermediate member 12, part of the torque (part of the average torque) transmitted from the drive member 11 to the second intermediate member 14 via the first inner springs SP21, or transmits, to the second intermediate member 14, part of the torque (part of the average torque) transmitted from the drive member 11 to the first intermediate member 12 via the first outer springs SP11. Accordingly, the damper device 10 has a third torque transmission path including the first inner springs SP21, the second intermediate member 14, the intermediate springs SPm, the first intermediate member 12, and the second outer springs SP12, or including the first outer springs SP11, the second intermediate member 14, the intermediate springs SPm, the second intermediate member 14, and the second inner springs SP22.

When the input torque to the drive member 11 reaches the torque T1, deflection of predetermined ones of the springs SP11, SP12, SP21, SP22, and SPm is restricted. Accordingly, when the input torque to the drive member 11 becomes equal to or greater than the torque T1, fluctuations in the torque transmitted to the drive member 11 by the springs whose deflection is not restricted are damped (absorbed), until deflection of all the springs SP11, SP12, SP21, SP22 and SPm is restricted.

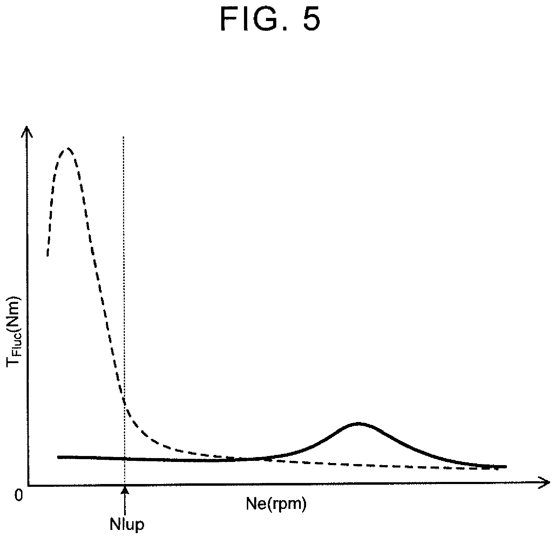

As described above, in the damper device 10, regardless of whether at least one of the first and second intermediate members 12 and 14 resonates, one of the vibration transmitted from the second outer springs SP12 to the driven member 16 and the vibration transmitted from the second inner springs SP22 to the driven member 16 can cancel at least part of the other vibration. Accordingly, as illustrated in FIG. 5, even when the input torque transmitted from the engine EG to the drive member 11 is relatively small and the rotational speed of Ne of the drive member 11, that is, the engine EG is lower than the rotational speed corresponding to a lower one of the natural frequencies of the first and second intermediate members 12 and 14, the vibration damping performance can successfully be improved. Further, as illustrated in FIG. 5, in the damper device 10, a lock-up rotational speed Nlup at which lock-up is performed by the lock-up clutch 8 can be set to a low rotation range to which a lock-up rotational speed cannot be set in a general damper device having vibration damping characteristics indicated by the broken line in FIG. 5. Thus, the lock-up rotational speed Nlup is further reduced to quickly and mechanically transmit torque from the engine EG to the transmission TM, so that it is possible to improve power transmission efficiency between the engine EG and the transmission TM, and thus to further improve fuel economy of the engine EG.

Further, in the damper device 10, the spring constant of the springs SP11, SP12, SP21, and SP22 and the moment of inertia (inertia) of the first and second intermediate members 12 and 14 may be adjusted such that the vibration transmitted from the second outer springs SP12 to the driven member 16 and the vibration transmitted from the second inner springs SP22 to the driven member 16 are phase-shifted by 180° with respect to each other. Thus, it is possible to further improve the vibration damping performance. However, the vibration transmitted from the second outer springs SP12 to the driven member 16 and the vibration transmitted from the second inner springs SP22 to the driven member 16 do not necessarily have to be phase-shifted by 180° with respect to each other.

In the damper device 10, the first and second outer springs SP11 and SP12 and the first and second inner springs SP21 and SP22 have positive rigidity, and the intermediate springs SPm have negative rigidity. Accordingly, it is possible to shift the phase of vibration transmitted from the second outer springs SP12 to the driven member 16 and the phase of vibration transmitted from the second inner springs SP22 to the driven member 16, while facilitating design of the entire damper device 10.

The intermediate springs SPm of the damper device 10 are coupled to the first and second intermediate members 12 and 14 to extend in the radial direction when the damper device 10 is in the mounted state. The intermediate springs SPm are compressed from the natural length thereof when the relative torsion angle between the first and second intermediate members 12 and 14 is zero. The intermediate springs SPm expand in accordance with relative rotation between the first and second intermediate members 12 and 14. Accordingly, from the point when the first and second intermediate members 12 and 14 rotate relative to each other upon start of rotation of the drive member 11 by the torque transmitted from the engine EG, that is, even when the rotational speed of the drive member 11 (engine EG) is very low, the first intermediate member 12 and the second intermediate member 14 are rotated in opposite directions so that the vibration transmitted from the second outer springs SP12 to the driven member 16 and the vibration transmitted from the second inner springs SP22 to the driven member 16 can be phase-shifted with respect to each other.

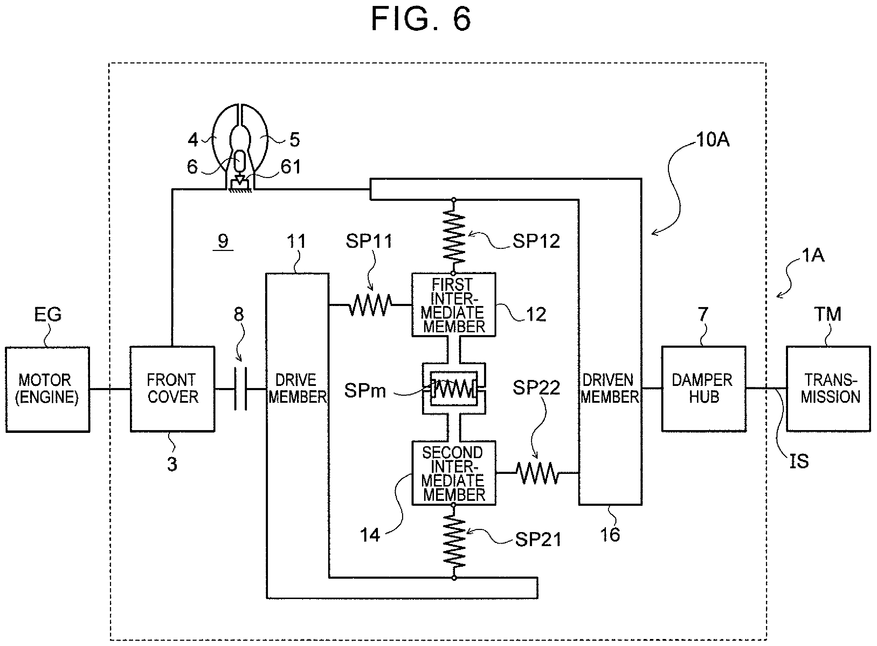

In the damper device 10, the elastic bodies having negative rigidity are not limited to the intermediate springs SPm, and one of the first and second outer springs SP11 and SP12 and the first and second inner springs SP21 and SP22 may have negative rigidity. Further, in the damper device 10, two or more of the first and second outer springs SP11 and SP12, the first and second inner springs SP21 and SP22, and the intermediate springs SPm may have negative rigidity. For example, one of the first and second outer springs SP11 and SP12 and the first and second inner springs SP21 and SP22, and the intermediate springs SPm may have negative rigidity. Alternatively, as in a damper device 10A of a starting device 1A illustrated in FIG. 6, the second outer springs SP12 (second elastic bodies) and the first inner springs SP21 (third elastic bodies) may have negative rigidity. Alternatively, the first outer springs SP11 (first elastic bodies) and the second inner springs SP22 (fourth elastic bodies) may have negative rigidity. Alternatively, the second outer springs SP12, the first inner springs SP21 and the intermediate springs SPm may have negative rigidity. Alternatively, the first outer springs SP11, the second inner springs SP22, and the intermediate springs SPm may have negative rigidity.

In the damper device 10, the elastic body having negative rigidity may be an elastic body other than a coil spring, such as a disc spring and a rubber material, for example. Further, in the damper device 10, the driven member 16 serving as an output element is coupled to the turbine runner 5 of the torque converter (fluid transmission device) to rotate therewith. However, the configuration is not limited thereto. That is, as indicated by the long dashed double-short dashed line in FIG. 1, the drive member 11 or the first intermediate member 12 may be coupled to the turbine runner 5 to rotate therewith, and the second intermediate member 14 may be coupled to the turbine runner 5 to rotate therewith.

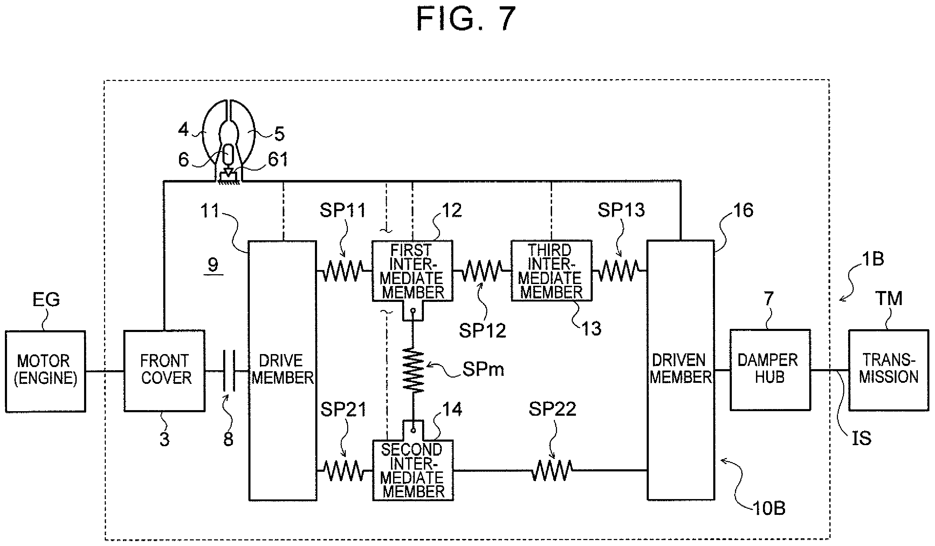

FIG. 7 is a schematic configuration diagram illustrating a starting device 1B including still another damper device 10B according to the present disclosure. Elements of the damper device 10B that are the same as those of the above-described damper device 10 are denoted by the same reference numerals, and a description thereof will not be repeated.

The damper device 10B illustrated in FIG. 7 includes, as a rotary element, a third intermediate member (third intermediate element) 13, in addition to the drive member 11, the first and second intermediate members 12 and 14, and the driven member 16. The damper device 10B further includes, as torque transmission elements, third outer springs SP13, in addition to the springs SP11, SP12, SP21, SP22, and SPm. The third intermediate member 13 of the damper device 10B receives torque transmitted from the second outer springs SP12. The third outer springs SP13 are disposed between the third intermediate member 13 and the driven member 16 to transmit rotational torque therebetween. That is, a first torque transmission path of the damper device 10B includes the first outer springs SP11, the first intermediate member 12, the second outer springs SP12, the third intermediate member 13, and the third outer springs SP13.

The damper device 10B can achieve the same advantageous effects as those achieved by the damper device 10 described above. Further, according to the damper device 10B including the third outer springs SP13, it is possible to further reduce the rigidity, that is, the equivalent rigidity of the entire damper device 10B, and thus to further improve the vibration damping performance. Further, in the damper device 10B of FIG. 7, the driven member 16 serving as an output element is coupled to the turbine runner 5 of the torque converter (fluid transmission device) to rotate therewith. However, the configuration is not limited thereto. That is, as indicated by the long dashed double-short dashed line in FIG. 7, the drive member 11 or the first or third intermediate member 12 or 13 may be coupled to the turbine runner 5 to rotate therewith, and the second intermediate member 14 may be coupled to the turbine runner 5 to rotate therewith.

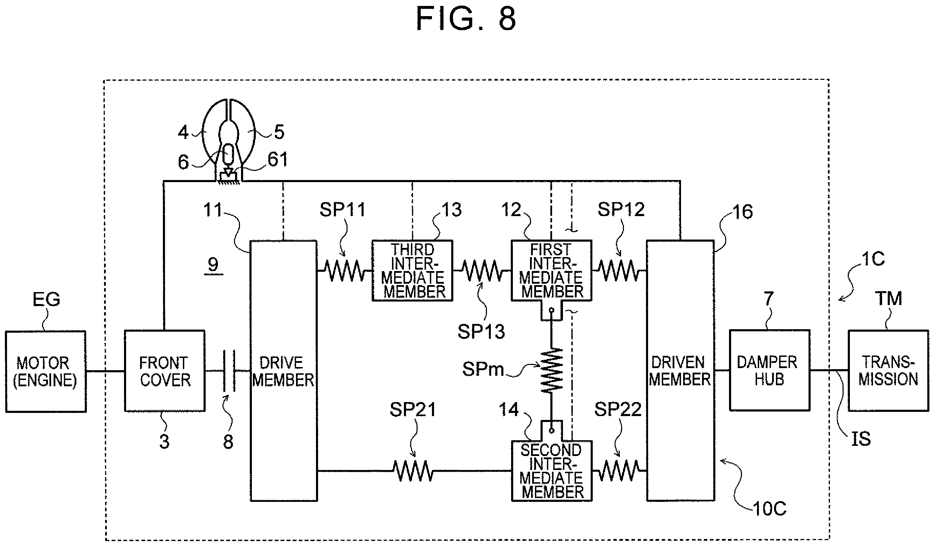

FIG. 8 is a schematic configuration diagram illustrating a starting device 1C including another damper device 10C according to the present disclosure. Elements of the damper device 10C that are the same as those of the above-described damper devices 10 and 10B are denoted by the same reference numerals, and a description thereof will not be repeated.

The damper device 10C illustrated in FIG. 8 includes, as a rotary element, a third intermediate member (third intermediate element) 13, in addition to the drive member 11, the first and second intermediate members 12 and 14, and the driven member 16. The damper device 10C further includes, as torque transmission elements, third outer springs SP13, in addition to the springs SP11, SP12, SP21, SP22, and SPm. The third intermediate member 13 of the damper device 10C receives torque transmitted from the first outer springs SP11. The third outer springs SP13 are disposed between the third intermediate member 13 and the first intermediate member 12 to transmit rotational torque therebetween. That is, a first torque transmission path of the damper device 10C includes the first outer springs SP11, the third intermediate member, the third outer springs SP13, the first intermediate member 12, and the second outer springs SP12.

The damper device 10C can achieve the same advantageous effects as those achieved by the damper device 10B described above. Further, in the damper device 10C of FIG. 8, the driven member 16 serving as an output element is coupled to the turbine runner 5 of the torque converter (fluid transmission device) to rotate therewith. However, the configuration is not limited thereto. That is, as indicated by the long dashed double-short dashed line in FIG. 8, the drive member 11 or the first or third intermediate member 12 or 13 may be coupled to the turbine runner 5 to rotate therewith, and the second intermediate member 14 may be coupled to the turbine runner 5 to rotate therewith.

As described above, the damper device according to the present disclosure is a damper device (10, 10B, 10C) including an input element (11) to which torque from an engine (EG) is transmitted and an output element (16). The damper device includes: a first intermediate element (12); a second intermediate element (14); a first elastic body (SP11) disposed between the input element (11) and the first intermediate element (12); a second elastic body (SP12) disposed between the first intermediate element (12) and the output element (16); a third elastic body (SP21) disposed between the input element (11) and the second intermediate element (14); a fourth elastic body (SP22) disposed between the second intermediate element (14) and the output element (16); and a fifth elastic body (SPm) disposed between the first intermediate element (12) and the second intermediate element (14), wherein at least one of the first to fifth elastic bodies (SP11, SP12, SP21, SP22, SPm) has negative rigidity.

In the damper device according to the present disclosure, the first elastic body transmits torque from the input element to the first intermediate element, and the second elastic body transmits torque from the first intermediate element to the output element. The third elastic body transmits torque from the input element to the second intermediate element, and the fourth elastic body transmits torque from the second intermediate element to the output element. The fifth elastic body transmits torque between the first intermediate element and the second intermediate element, and one of the first to fifth elastic bodies has negative rigidity. Accordingly, when torque transmitted from the engine to the input element is transmitted to the output element, the first intermediate element and the second intermediate element are rotated in opposite directions so that the vibration transmitted from the second elastic body to the output element and the vibration transmitted from the fourth elastic body to the output element can be phase-shifted with respect to each other. Therefore, in the damper device according to the present disclosure, regardless of whether at least one of the first and second intermediate elements resonates, one of the vibration transmitted from the second elastic body to the output element and the vibration transmitted from the fourth elastic body to the output element can cancel at least part of the other vibration. As a result, even when the rotational speed of the input element is lower than the rotational speed corresponding to a lower one of the natural frequencies of the first and second intermediate elements, the vibration damping performance can successfully be improved.

As described above, it is preferable that when deflection of all the first to fifth elastic bodies (SP11, SP12, SP21, SP22, SPm) is allowed, one of a vibration transmitted from the second elastic body (SP12) to the output element (16) and a vibration transmitted from the fourth elastic body (SP22) to the output element (16) cancels at least part of the other of the vibrations.

The first to fourth elastic bodies (SP11, SP12, SP21, SP22) may have positive rigidity, and the fifth elastic body (SPm) may have negative rigidity. Accordingly, the vibration transmitted from the second elastic body to the output element and the vibration transmitted from the fourth elastic body to the output element can be phase-shifted with respect to each other, while facilitating design of the entire damper device. The term "positive rigidity" means that a reaction force of an elastic body increases as the relative torsion angle between two rotary elements disposed on the opposite sides of the elastic body increases, and the term "negative rigidity" means that a reaction force of an elastic body decreases as the relative torsion angle between two rotary elements disposed on the opposite sides of the elastic body increases.

The fifth elastic body (SPm) may be compressed from a natural length thereof when a relative torsion angle between the first and second intermediate elements (12, 14) is zero, and expands in accordance with relative rotation between the first and second intermediate elements (12, 14). Accordingly, from the point when the first and second intermediate elements rotate relative to each other upon start of rotation of the input element (start of torque transmission), the first intermediate element and the second intermediate element are rotated in opposite directions so that the vibration transmitted from the second elastic body to the output element and the vibration transmitted from the fourth elastic body to the output element can be phase-shifted with respect to each other.

The fifth elastic body (SPm) may be coupled to the first and second intermediate elements (12, 14) to extend in a radial direction of the damper device (10, 10B, 10C) with the damper device (10, 10B, 10C) being in a mounted state.

The damper device (10, 10B, 10C) may be configured such that deflection of the first to fifth elastic bodies (SP11, SP12, SP21, SP22, SPm) is not restricted until input torque transmitted to the input element becomes equal to or greater than a predetermined threshold (T1). Thus, it is possible to successfully improve the vibration damping performance of the damper device when the input torque transmitted to the input element is relatively small, and the rotational speed of the input element is low.

The first, second, third, and fourth elastic bodies (SP11, SP12, SP21, SP22) may be coil springs, and the coil springs may be linear coil springs or may be arc coil springs. However, when any of the first, second, third, and fourth elastic bodies is an elastic body having negative rigidity, the elastic body may be an elastic body other than a coil spring, such as a disc spring and a rubber material, for example.

The fifth elastic body (SPm) may be a coil spring, and the coil spring may be a liner coil spring. However, when the fifth elastic body is an elastic body having negative rigidity, the fifth elastic body may be an elastic body other than a coil spring, such as a disc spring and a rubber material, for example.

The output element (16) may be operatively (directly or indirectly) coupled to an input shaft (IS) of a transmission (TM), and the input element (11) may be operatively (directly or indirectly) coupled to an output shaft of an internal combustion engine (EG).

Any one of the input element (11), the output element (16), and the first and the second intermediate elements (12 and 14) may be coupled to a turbine runner (5) of a fluid transmission device to rotate therewith, together with the pump impeller (4).

It should be understood that the invention of the present disclosure is not in any way limited to the embodiments described above, and various modifications may be made within the scope of the appended claims. The above-described embodiments are merely specific examples of the invention described in "SUMMARY OF THE INVENTION", and are not intended to limit the elements of the invention described in "SUMMARY OF THE INVENTION".

### INDUSTRIAL APPLICABILITY

The invention of the present disclosure is applicable to the field of manufacturing damper devices and the like.

## Claims

1. A damper device (10) including an input element (11) to which torque from an engine is transmitted and an output element (16), the damper device comprising:
a first intermediate element (12);
a second intermediate element (14);
a first elastic body (SP11) disposed between the input element and the first intermediate element;
a second elastic body (SP12) disposed between the first intermediate element and the output element;
a third elastic body (SP21) disposed between the input element and the second intermediate element;
a fourth elastic body (SP22) disposed between the second intermediate element and the output element; **characterised in that** the damper device further comprises :
a fifth elastic body (SPm) disposed between the first intermediate element and the second intermediate element, wherein
at least one of the first to fifth elastic bodies has negative rigidity.

2. The damper device according to claim 1, wherein
when deflection of all the first to fifth elastic bodies is allowed, one of a vibration transmitted from the second elastic body to the output element and a vibration transmitted from the fourth elastic body to the output element cancels at least part of the other of the vibration transmitted from the second elastic body to the output element and the vibration transmitted from the fourth elastic body to the output element.

3. The damper device according to claim 1 or 2, wherein
the first to fourth elastic bodies have positive rigidity, and the fifth elastic body has negative rigidity.

4. The damper device according to any one of claims 1 to 3, wherein
the fifth elastic body is compressed from its natural length when a relative torsion angle between the first and second intermediate elements is zero, and expands in accordance with relative rotation between the first and second intermediate elements.

5. The damper device according to claim 4, wherein
the fifth elastic body is coupled to the first and second intermediate elements to extend in a radial direction of the damper device with the damper device being in a mounted state.

6. The damper device according to any one of claims 1 to 5, wherein
deflection of the first to fifth elastic bodies is not restricted until input torque transmitted to the input element becomes equal to or greater than a predetermined threshold.

7. The damper device according to any one of claims 1 to 6, wherein
the first, second, third, and fourth elastic bodies are coil springs.

8. The damper device according to any one of claims 1 to 7, wherein
the fifth elastic body is a coil spring.

9. The damper device according to any one of claims 1 to 8, wherein
the output element is operatively coupled to an input shaft of a transmission (TM).

10. The damper device according to any one of claims 1 to 9, wherein
one of the input element, the output element, and the first and second intermediate elements is coupled to a turbine runner (5) of a fluid transmission device to rotate with the turbine runner.

## Patentansprüche

1. Dämpfervorrichtung (10) mit einem Eingangselement (11), an das Drehmoment von einem Motor übertragen wird, und einem Ausgangselement (16), welche Dämpfervorrichtung aufweist:
ein erstes Zwischenelement (12);
ein zweites Zwischenelement (14);
einen ersten elastischen Körper (SP11), der zwischen dem Eingangselement und dem ersten Zwischenelement angeordnet ist;
einen zweiten elastischen Körper (SP12), der zwischen dem ersten Zwischenelement und dem Ausgangselement angeordnet ist;
einen dritten elastischen Körper (SP21), der zwischen dem Eingangselement und dem zweiten Zwischenelement angeordnet ist;
einen vierten elastischen Körper (SP22), der zwischen dem zweiten Zwischenelement und dem Ausgangselement angeordnet ist; **dadurch gekennzeichnet, dass** die Dämpfervorrichtung ferner aufweist:
einen fünften elastischen Körper (SPm), der zwischen dem ersten Zwischenelement und dem zweiten Zwischenelement angeordnet ist, bei der
mindestens einer von dem ersten bis fünften elastischen Körper eine negative Steifigkeit aufweist.

2. Dämpfervorrichtung nach Anspruch 1, bei der,
wenn eine Auslenkung aller des ersten bis fünften elastischen Körpers erlaubt wird, eine von einer Schwingung, die von dem zweiten elastischen Körper an das Ausgangselement übertragen wird, und einer Schwingung, die von dem vierten elastischen Körper an das Ausgangselement übertragen wird, zumindest einen Teil der anderen von der Schwingung, die von dem zweiten elastischen Körper an das Ausgangselement übertragen wird, und der Schwingung, die von dem vierten elastischen Körper an das Ausgangselement übertragen wird, aufhebt.

3. Dämpfervorrichtung nach Anspruch 1 oder 2, bei der
der erste bis vierte elastische Körper eine positive Steifigkeit aufweist und der fünfte elastische Körper eine negative Steifigkeit aufweist.

4. Dämpfervorrichtung nach einem der Ansprüche 1 bis 3, bei der
der fünfte elastische Körper von seiner natürlichen Länge komprimiert ist, wenn ein relativer Torsionswinkel zwischen dem ersten und dem zweiten Zwischenelement null ist, und sich entsprechend einer relativen Drehung zwischen dem ersten und dem zweiten Zwischenelement ausdehnt.

5. Dämpfervorrichtung nach Anspruch 4, bei der
der fünfte elastische Körper an das erste und das zweite Zwischenelement so gekoppelt ist, dass er sich bei der Dämpfervorrichtung in einem montierten Zustand in einer radialen Richtung der Dämpfervorrichtung erstreckt.

6. Dämpfervorrichtung nach einem der Ansprüche 1 bis 5, bei der
eine Auslenkung des ersten bis fünften elastischen Körpers nicht eingeschränkt wird, bis ein Eingangsdrehmoment, das an das Eingangselement übertragen wird, gleich oder größer als ein vorherbestimmter Schwellwert wird.

7. Dämpfervorrichtung nach einem der Ansprüche 1 bis 6, bei der
der erste, der zweite, der dritte und der vierte elastische Körper Schraubenfedern sind.

8. Dämpfervorrichtung nach einem der Ansprüche 1 bis 7, bei der
der fünfte elastische Körper eine Schraubenfeder ist.

9. Dämpfervorrichtung nach einem der Ansprüche 1 bis 8, bei der
das Ausgangselement operativ an eine Eingangswelle eines Getriebes (TM) gekoppelt ist.

10. Dämpfervorrichtung nach einem der Ansprüche 1 bis 9, bei der
eines von dem Eingangselement, dem Ausgangselement und dem ersten und dem zweiten Zwischenelement an ein Turbinenrad (5) einer Strömungsgetriebevorrichtung gekoppelt ist, so dass es sich mit dem Turbinenrad dreht.

## Revendications

1. Dispositif amortisseur (10) comprenant un élément d'entrée (11) auquel le couple d'un moteur est transmis et un élément de sortie (16), le dispositif amortisseur comprenant :
un premier élément intermédiaire (12) ;
un deuxième élément intermédiaire (14) ;
un premier corps élastique (SP11) disposé entre l'élément d'entrée et le premier élément intermédiaire ;
un deuxième corps élastique (SP12) disposé entre le premier élément intermédiaire et l'élément de sortie ;
un troisième corps élastique (SP21) disposé entre l'élément d'entrée et le deuxième élément intermédiaire ;
un quatrième corps élastique (SP22) disposé entre le deuxième élément intermédiaire et l'élément de sortie ; **caractérisé en ce que** le dispositif amortisseur comprend en outre :
un cinquième corps élastique (SPm) disposé entre le premier élément intermédiaire et le deuxième élément intermédiaire, dans lequel
au moins l'un des premier à cinquième corps élastiques présente une rigidité négative.

2. Dispositif amortisseur selon la revendication 1, dans lequel,
lorsqu'une déflexion de tous les premier à cinquième corps élastiques est autorisée, une vibration parmi une vibration transmise du deuxième corps élastique à l'élément de sortie et une vibration transmise du quatrième corps élastique à l'élément de sortie annule au moins partiellement l'autre des vibrations transmises du deuxième corps élastique à l'élément de sortie et les vibrations transmises du quatrième corps élastique à l'élément de sortie.

3. Dispositif amortisseur selon la revendication 1 ou 2, dans lequel
les premier à quatrième corps élastiques ont une rigidité positive, et le cinquième corps élastique a une rigidité négative.

4. Dispositif amortisseur selon l'une quelconque des revendications 1 à 3, dans lequel
le cinquième corps élastique est comprimé à partir de sa longueur naturelle lorsqu'un angle de torsion relative entre le premier et le deuxième éléments intermédiaires est nul, et s'étend selon une rotation relative entre le premier et le deuxième éléments intermédiaires.

5. Dispositif amortisseur selon la revendication 4, dans lequel
le cinquième corps élastique est couplé aux premier et deuxième éléments intermédiaires pour s'étendre dans une direction radiale du dispositif amortisseur, le dispositif amortisseur étant à l'état monté.

6. Dispositif amortisseur selon l'une quelconque des revendications 1 à 5, dans lequel
la déflexion du premier au cinquième corps élastique n'est pas limitée jusqu'à ce que le couple d'entrée transmis à l'élément d'entrée devient égal ou supérieur à un seuil prédéterminé.

7. Dispositif amortisseur selon l'une quelconque des revendications 1 à 6, dans lequel
les premier, deuxième, troisième et quatrième corps élastiques sont des ressorts hélicoïdaux.

8. Dispositif amortisseur selon l'une quelconque des revendications 1 à 7, dans lequel
le cinquième corps élastique est un ressort hélicoïdal.

9. Dispositif amortisseur selon l'une quelconque des revendications 1 à 8, dans lequel
l'élément de sortie est couplé de manière opérationnelle à un arbre d'entrée d'une transmission (TM).

10. Dispositif amortisseur selon l'une quelconque des revendications 1 à 9, dans lequel
l'un des éléments parmi l'élément d'entrée, l'élément de sortie et les premier et deuxième éléments intermédiaires est couplé à une roue de turbine (5) d'un dispositif de transmission de fluide pour tourner avec cette roue de turbine.
